# EUROPEAN PATENT SPECIFICATION

(11) **EP 2 564 632 B1**
(45) Date of publication and mention of the grant of the patent: **30.04.2014**
(21) Application number: 10721138.5
(22) Date of filing: 30.04.2010
(51) Int. Cl.: H04W 36/00, H04W 36/08, H04W 84/04, H04W 36/24

(54) **PROXIMITY REPORTING PROCEDURES IN RADIO ACCESS**
NÄHERUNGSMELDEVERFAHREN BEI FUNKZUGÄNGEN
PROCÉDURES DE SIGNALEMENT DE PROXIMITÉ EN ACCÈS RADIO

(43) Date of publication of application: 06.03.2013
(73) Proprietor: Nokia Solutions and Networks Oy, 02610 Espoo (FI)
(72) Inventor: SZUFARSKA, Agnieszka, PL-80-299 Gdansk (PL); DRAZYNSKI, Karol, PL-53-611 Wroclaw (PL); PEDERSEN, Klaus Ingemann, DK-9000 Aalborg (DK); LACHOWSKI, Jaroslaw, PL-33-300 Nowy Sacz (PL)
(74) Representative: Borgström, Markus
(86) International application number: PCT/EP2010/055919
(87) International publication number: WO 2011/134530

(56) References cited:
- PANASONIC: "Proximity indication for multiple CSG or Hybrid cells", 3GPP DRAFT; R2-101078, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. San Francisco, USA; 20100222, 16 February 2010 (2010-02-16), XP050421744, [retrieved on 2010-02-16]
- ZTE: "Proximity indication handling for handover", 3GPP DRAFT; R2-100327_PROXIMITY INIDICATION HANDLING FOR HANDOVER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Valencia, Spain; 20100118, 12 January 2010 (2010-01-12), XP050421029, [retrieved on 2010-01-12]
- NTT DOCOMO ET AL: "Cell identity reporting in proximity indication", 3GPP DRAFT; R2-100517 PROXIMITY - CGI REPORTING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Valencia, Spain; 20100118, 12 January 2010 (2010-01-12), XP050421131, [retrieved on 2010-01-12]
- "Universal Mobile Telecommunications System (UMTS); Mobility procedures for Home Node B (HNB); Overall description; Stage 2 (3GPP TS 25.367 version 9.3.0 Release 9)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP RAN 2, no. V9.3.0, 1 April 2010 (2010-04-01), XP014046587,
- HUAWEI: "Discussion on some open issues of proximity indication", 3GPP DRAFT; R2-096805, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20091109, 1 November 2009 (2009-11-01), XP050391257, [retrieved on 2009-11-03]
- VODAFONE: "Scope of Proximity Indication", 3GPP DRAFT; R2-096586, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20091109, 13 November 2009 (2009-11-13), XP050391145, [retrieved on 2009-11-02]

## Description

### Field of the invention

The present invention relates to proximity reporting procedures in radio access, for example in heterogeneous network environments.

### Background of the invention

In the development of radio communication systems, in particular cellular communication (like for example GSM (Global System for Mobile Communication), GPRS (General Packet Radio Service), HSPA (High Speed Packet Access), UMTS (Universal Mobile Telecommunication System) or the like), efforts are made for an evolution of the radio access part thereof. In this regard, the evolution of radio access networks (like for example the GSM EDGE radio access network (GERAN) and the Universal Terrestrial Radio Access Network (UTRAN) or the like) is currently addressed. Such improved radio access networks are sometimes denoted as evolved or advanced radio access networks (like for example the Evolved Universal Terrestrial Radio Access Network (E-UTRAN)) or as being part of a long-term evolution (LTE) or LTE-Advanced, also generally referred to as International Mobile Communications - Advanced (IMT-A). Although such denominations primarily stem from 3GPP (Third Generation Partnership Project) terminology, the usage thereof hereinafter does not limit the respective description to 3GPP technology, but generally refers to any kind of radio access evolution irrespective of the underlying system architecture.

In the following, for the sake of intelligibility, LTE (Long-Term Evolution according to 3GPP terminology) or LTE-Advanced is taken as a non-limiting example for a radio access network of cellular type being applicable in the context of the present invention and its embodiments. However, it is to be noted that any kind of radio access network of cellular type, such as HSPA and/or UMTS, may likewise be applicable, as long as it exhibits comparable features and characteristics as described hereinafter.

In the development of cellular systems in general, and access networks in particular, the use of microcells (also referred to as picocells or femtocells) for providing for additional capacity in areas with a high user deployment is proposed as one concept. Also, heterogeneous network environments comprising a combination of macrocells and microcells (also referred to as picocells or femtocells) are proposed as one concept. Thereby, the macrocells typically provide for a large coverage, while the microcells typically provide for additional capacity in areas with a high user deployment. In the context of LTE or LTE-Advanced, the macrocells are deployed by base stations denoted as eNBs, while microcells are deployed by home base stations denoted as HeNBs. In a specific case, the microcells may be CSG or hybrid cells, i.e. cells of a closed subscriber group (CSG) or of a closed subscriber group (CSG) and other subscribers, which represent permitted cells for subscribers being members of the particular closed subscriber group (CSG).

In network environments comprising microcells, a specific issue is inter-microcell mobility, i.e. mobility and/or handover from a currently serving microcell (a microcell base station such as e.g. HeNB) to another microcell (another microcell base station such as e.g. HeNB)), in particular between CSG/hybrid (micro-)cells.

In heterogeneous network environments, a specific issue is inbound mobility, i.e. mobility and/or handover from a currently serving macrocell (a macrocell base station such as e.g. eNB) to a microcell (a microcell base station such as e.g. HeNB), in particular CSG/hybrid (micro-)cells. In heterogeneous network environments, above-mentioned inter-microcell mobility is also possible.

The mobility procedures for HeNBs are for example described in the specification 3GPP TS 25.367 V9.3.0 Release 9, 1 April 2010.

According to conventional rules for inbound mobility e.g. in LTE and LTE-Advanced networks, a user equipment uses an autonomous search function in RRC_IDLE mode for acquiring and storing the location, operating frequency (i.e. radio access carrier) and radio access technology (RAT) of a permitted (CSG/hybrid) microcell in its proximity, and then, in RRC_CONNECTED mode, indicates its proximity to the permitted (CSG/hybrid) microcell to its serving macrocell base station. The serving macrocell base station representing a source of mobility/handover provides a measurement configuration for the indicated frequency, and the user equipment tries to detect the respective permitted (CSG/hybrid) microcell on the basis of this measurement configuration on the indicated frequency. When detected, the user equipment reports e.g. the physical cell identifier (PCI) of the permitted (CSG/hybrid) microcell to the macrocell base station, and then handover from the macrocell base station to the microcell base station is performed. That is, inbound mobility in heterogeneous network environments is based on conventional proximity reporting procedures.

Details of proximity indication for multiple CSG or hybrid cells are for example described in the 3GPP draft document R2-101078 entitled "proximity indication for multiple CSG or Hybrid cells" by Panasonic, published on 16.2.2010.

Further details regarding proximity indication and associated procedures, use cases and problems are for example described in the 3GPP draft document R2-100327 entitled "Proximity indication handling for handover" by ZTE, published on 12.1.2010, the 3GPP draft document R2-100517 entitled "Cell identity reporting in proximity indication" by NTT DoCoMo et al., published on 12.1.2010, the 3GPP draft document R2-096805 entitled "Discussion on some open issues of proximity indication" by Huawei published on 1.11.2009, and the 3GPP draft document R2-096586 entitled "Scope of Proximity Indication" by Vodafone, published on 13.11.2009.

The conventional rules for inbound mobility in heterogeneous network environments (i.e. the conventional proximity reporting procedures) assume and, thus, require that the operating frequency of the microcell representing a target of mobility/handover remains the same. That is, when the operating frequency, i.e. the carrier used for radio access, of a respective microcell changes over time, no inbound mobility is feasible according the conventional rules.

This is a problem, since it may not be ensured that the operating frequency of microcells necessarily remains the same over time. Rather, in view of dynamic interference management techniques, the operating frequency (i.e. radio access carrier) of microcells may be subject to change over time so as to ensure low interference and high capacity in changing environments.

There is proposed a concept known as autonomous component carrier selection (ACCS). The ACCS scheme is a concept, proposed for LTE or LTE-Advanced networks, that uses carrier aggregation and describes a way in which operating frequencies (referred to as component carriers in LTE or LTE-Advanced) are allocated to different microcell base stations HeNBs over time. This concept includes possible changes of secondary component carriers (SCC) and (less frequent) changes of a primary component carrier (PCC). When the ACCS scheme is applied to heterogeneous network environments comprising a combination of macrocells and microcells, the macrocells may still use a plain frequency reuse one, while the microcells may use ACCS in order to control HeNB-to-HeNB interference among the microcells.

There are also proposed other concepts of varying operating frequencies (radio access carriers) of microcells without the use of carrier aggregation. For example, a microcell base station such as e.g. a HeNB may autonomously select a preferred operating frequency from a predefined set of candidate frequencies, wherein the selection may be based on HeNB measurements in which it may for example be measured which carrier frequency is having the lowest interference level. Such HeNB measurements may be performed in periods with no users being currently served by the HeNB, and such new measurements may result in the change of the carrier frequency being subsequently used by the HeNB.

In radio access systems enabling a varying operating frequency (radio access carrier) of microcells, the conventional rules for inbound mobility (i.e. the conventional proximity reporting procedures) do not work.

Namely, when for example combining above-described conventional inbound mobility procedures to (CSG/Hybrid) microcells with the above-described ACCS scheme, microcell detection and handover will fail, as described below.

For example, it is assumed that a user equipment UE has memorized, using an autonomous search function in RRC_IDLE mode, the location, frequency and RAT of a permitted CSG/hybrid cell. Hence, in a scenario in which the UE is approaching the permitted CSG/hybrid microcell (e.g. with a HeNB base station) in which it was previously served on frequency f₁, the autonomous search function of the UE would have memorized this particular frequency f₁ for the concerned CSG/hybrid microcell. In such a case the inbound mobility procedure for RRC_CONNECTED mode would be such that the UE would indicate to the eNB of its currently serving macrocell, using a proximity indication message, that it is near a permitted HeNB microcell on a given frequency, the eNB would, in response thereto, send back a measurement configuration message for the indicated frequency, the UE would perform measurements based on this measurement configuration, and the UE, after having performed the measurements, would report to the eNB the PCI of CSG/hybrid microcell being the target of mobility. Yet, this does not work when the target microcell has changed its operating frequency since the preceding access of the UE, e.g. due to e.g. ACCS or other scenarios in which cells are eligible to select additional component carriers and/or change the currently selected ones e.g. to support growing need for capacity and/or to mitigate potential interference problems. In such a scenario, once the UE would memorize in RRC_IDLE mode the frequency and location of a permitted CSG/hybrid microcell, the frequency might not be valid any more the next time the UE would be in proximity of the target microcell and would indicate this particular frequency within a proximity indication message to its currently serving macrocell while in RRC_CONNECTED. When the target microcell has changed its operating frequency since the preceding access of the UE, this would result in unnecessary signaling, i.e. an unnecessarily proximity indication to the network (macrocell), to a microcell which is not any more present on the given frequency. If no information about a current frequency of the microcell is available at the UE, HeNB detection and handover will not be successful (due to the wrong frequency being used).

While specific problems are described above in connection with inbound mobility in heterogeneous network environments, the same or similar problems also exist for inter-microcell mobility in network environments comprising microcells. That is, in radio access systems enabling a varying operating frequency (radio access carrier) of microcells, conventional rules for inter-microcell mobility (i.e. the conventional proximity reporting procedures) do not work as well.

Accordingly, there is a demand for enabling inbound mobility, i.e. for effective proximity reporting procedures in radio access, especially in network environments comprising microcells, such as e.g. in heterogeneous network environments, with time-varying radio access carriers in microcells.

### Summary of embodiments of the invention

The present invention and its embodiments aim at solving the above problems.

The present invention and its embodiments are made to enable mobility, i.e. to provide effective proximity reporting procedures, in network environments comprising microcells, such as e.g. heterogeneous network environments, with time-varying radio access carriers in microcells.

According to an exemplary first aspect of the present invention, there is provided a method as defined in independent claim 1.

Further developments or modifications of the method according to the exemplary first aspect of the present invention are defined in associated dependent claims.

According to an exemplary second aspect of the present invention, there is provided an apparatus as defined in independent claim 12.

Further developments or modifications of the apparatus according to the exemplary first aspect of the present invention are defined in associated dependent claims.

According to an exemplary third aspect of the present invention, there is provided a computer program product as defined in claims 23 and 24.

By way of exemplary embodiments of the present invention, there are provided improved/enhanced proximity reporting procedures and/or improved/enhanced (inter-microcell/inbound) mobility procedures in network environments comprising microcells, such as e.g. heterogeneous network environments.

By way of exemplary embodiments of the present invention, inter-microcell mobility from microcell to microcell and/or inbound mobility from a macrocell to a microcell is enabled even if the target microcell has changed its radio access carrier since a preceding access to this microcell.

By way of exemplary embodiments of the present invention, the improved/enhanced proximity reporting procedures and/or improved/enhanced inbound mobility procedures are applicable to any kind of network environments comprising microcells, such as e.g. heterogeneous network environments comprising a combination of macrocells and microcells, for example in LTE/LTE-Advanced, HSPA, and/or UMTS network systems.

### Brief description of the drawings

In the following, the present invention will be described in greater detail by way of non-limiting examples with reference to the accompanying drawings, in which
Figure 1 shows a schematic diagram of an example of a deployment scenario of a heterogeneous network environment comprising a combination of macrocells and microcells,
Figure 2 shows a signaling diagram of a procedure according to exemplary embodiments of the present invention, and
Figure 3 shows a block diagram of an apparatus according to exemplary embodiments of the present invention.

### Detailed description of embodiments of the present invention

The present invention is described herein with reference to particular non-limiting examples and to what are presently considered to be conceivable embodiments of the present invention. A person skilled in the art will appreciate that the invention is by no means limited to these examples, and may be more broadly applied.

In particular, the present invention and its embodiments are mainly described in relation to 3GPP specifications being used as non-limiting examples for certain exemplary network configurations and deployments. In particular, an LTE/LTE-A (E-UTRAN) radio access network is used as a non-limiting example for the applicability of thus described exemplary embodiments. Further, a heterogeneous network environment comprising a combination of macrocells being represented by eNB nodes and microcells being represented by HeNB nodes or, particularly, by CSG/hybrid microcells is used as a non-limiting example for the applicability of thus described exemplary embodiments. Further, the above-described ACCS scheme is used as a non-limiting example for a dynamic carrier changing concept for the applicability of thus described exemplary embodiments. As such, the description of exemplary embodiments given herein specifically refers to terminology which is directly related thereto. Such terminology is only used in the context of the presented non-limiting examples, and does naturally not limit the invention in any way. Rather, any other network configuration or system deployment comprising microcells, any other dynamic carrier changing concept, etc. may also be utilized as long as compliant with the features described herein.

In particular, embodiments of the present invention may be equally applied to any network environments comprising microcells, such as e.g. heterogeneous network environments comprising a combination of macrocells and microcells, irrespective of the underlying radio access system or technology. In LTE/LTE-Advanced, embodiments of the present invention are applicable to HeNB microcells, e.g. CGS/hybrid microcells, exemplarily using the ACCS scheme for carrier selection. In HSPA/UMTS, embodiments of the present invention are applicable to pico-/femtocells, e.g. CGS/hybrid pico-/femtocells, exemplarily using a multi-carrier/multi-band concept with an ACCS-like scheme for carrier selection.

Hereinafter, various embodiments and implementations of the present invention and its aspects or embodiments are described using several alternatives. It is generally noted that, according to certain needs and constraints, all of the described alternatives may be provided alone or in any conceivable combination (also including combinations of individual features of the various alternatives).

In the following, exemplary embodiments of the present invention are described with reference to methods, procedures and functions.

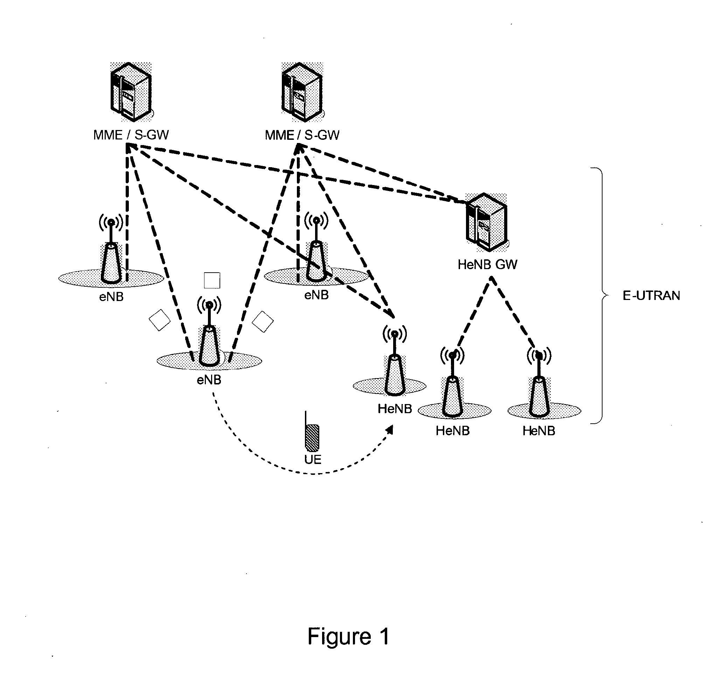

Figure 1 shows a schematic diagram of an example of a deployment scenario of a heterogeneous network environment comprising a combination of macrocells and microcells, in which embodiments of the present invention are applicable.

In Figure 1, a deployment scenario of a heterogeneous network environment in a E-UTRAN architecture is exemplarily depicted. The eNBs of Figure 1 represent macrocell base stations and the shaded areas around them represent macrocells, while the HeNBs of Figure 1 represent microcell base stations and the shaded areas around them represent microcells. The eNBs and HeNBs are connected to a core network portion (not shown) via combined mobility management entities and serving gateways and/or HeNB gateways, respectively.

In Figure 1, an assumed mobility of a user equipment UE is indicated by a dashed arrow between one eNB and one HeNB. Accordingly, as an assumption for the further description, the UE is assumed to approach a HeNB microcell (which has already previously served the UE), and a handover from the currently serving eNB macrocell to this HeNB microcell is to be performed.

According to exemplary embodiments of the present invention, an assumed mobility of a user equipment UE may also be between a HeNB and another HeNB. Accordingly, it may equally be assumed that the UE approaches a HeNB microcell (which has already previously served the UE), and a handover from the currently serving HeNB microcell to this HeNB microcell is to be performed.

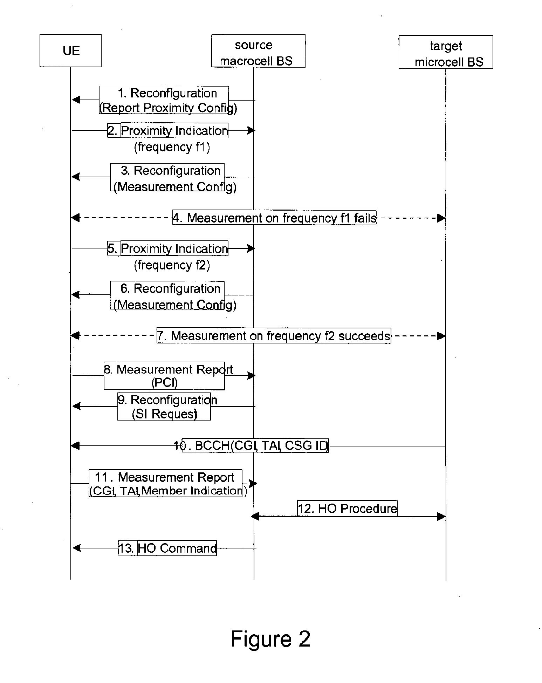

Figure 2 shows a signaling diagram of a procedure according to exemplary embodiments of the present invention, which could be based on the deployment scenario of Figure 1. The source macrocell base station (BS) of Figure 2 may e.g. be represented by the eNB of Figure 1, where the dashed arrow begins, the target microcell base station (BS) of Figure 2 may e.g. be represented by the HeNB of Figure 1, where the dashed arrow ends.

As an alternative to the thus depicted inbound mobility case, the source macrocell base station (BS) may be replaced by a source microcell base station (BS) in the case of inter-microcell mobility.

While not shown in Figure 2, it is assumed that the UE, while being in RRC_IDLE mode, has already (i.e. prior to the signaling diagram of Figure 2) executed an autonomous search function. Thereby, the UE has acquired and stored (for use in the subsequent proximity reporting and inbound mobility procedures) information about the carrier (i.e. frequency and/or component carrier) of the HeNB by which the UE has previously been served by the HeNB in its preceding access thereto, as well as information about further carriers (i.e. frequencies and/or component carriers) of the HeNB. These further carriers may comprise a set of carriers used by the HeNB during the preceding access of the UE, including e.g. a primary carrier and/or a set of secondary carriers, and/or a set of carriers not used but available for use by the HeNB during the preceding access of the UE.

When the HeNB uses the ACCS scheme, these sets of carriers may comprise a primary component carrier (PCC) and/or (a whole set of) secondary component carriers (SCC) of a carrier aggregation according to the ACCS scheme. In this case, the acquisition of corresponding information at the UE may be accomplished based on ACCS-related information being communicated using over-the-air (OTA) communication (OTAC) to and/or from the HeNB, i.e. among the HeNBs in the E-UTRAN. A respective ACCS information element may e.g. be broadcast or exchanged using OTAC, the OTAC thus being the source of ACCS-related information for the HeNB as well as the source of carrier-related information for the UE (e.g. PCC in use by the HeNB, all SCCs in use by the HeNB, other component carriers not currently used but available for use/selection by the HeNB, and the like).

Returning to the signaling diagram of Figure 2, the proximity reporting and inbound mobility procedures according to exemplary embodiments of the present invention, for which the previously acquired and stored carrier-related information are used, are described in detail below.

According to the exemplary procedure of Figure 2, the UE, while being in RRC_IDLE mode, is initially configured with proximity indication control configuration in step 1. In step 2, the UE currently being served by the mobility source point eNB approaches the mobility target point HeNB (which may be a CSG/hybrid HeNB the CSG identifier of which is in the UE's whitelist, i.e. the Ue is a member of the CSG thereof) and, thus, sends a proximity indication to the eNB in step 2. This proximity indication includes the carrier (e.g. frequency and/or component carrier) according to a preceding access of the UE to the HeNB. According to embodiments of the present invention, the carrier according to a preceding access may be the carrier by which the UE was served by the HeNB in the preceding access, or a primary carrier (e.g. PCC according to the ACCS scheme) used by the HeNB during the preceding access of the UE although the UE was not served by this primary carrier. The latter choice may be beneficial, since the primary carrier (e.g. PCC) is the carrier that shall be changed least frequently according to an arbitrary dynamic carrier changing concept (e.g. ACCS) and, thus, the primary carrier is the most secure selection in terms of the probability of being still valid.

In step 3, the UE is configured by the eNB with a measurement configuration for the UE's HeNB detection on the thus indicated carrier (e.g. frequency and/or component carrier). Then, in step 4, the UE performs measurements based on the received measurement configuration for detecting the HeNB of the permitted (CSG/hybrid) microcell being approached. This measurement is performed on the thus indicated carrier for which the measurement configuration has been received, exemplarily being denoted as f1 in Figure 2. Since in the present case it is assumed that the HeNB has in the meantime changed its carrier or carriers for radio access and the UE has not been informed about such change, the measurement on the carrier according to the preceding access fails. That is, the HeNB (and its PCI) may not be detected by the UE. Hence, according to conventional procedures, the proximity reporting and inbound mobility procedures fail accordingly.

According to the proximity reporting and inbound mobility procedures according to exemplary embodiments of the present invention, upon failure of measurement/detection on the carrier according to the preceding access, the UE continues by way of another carrier (e.g. frequency and/or component carrier) of the HeNB, as previously acquired and stored. In step 5, the UE chooses one of the previously acquired and stored set of carriers used by the HeNB during the preceding access of the UE, including e.g. a primary carrier and/or a set of secondary carriers, or one of the previously acquired and stored set of carriers not used but available for use by the HeNB during the preceding access of the UE, and sends a proximity indication to the eNB. This proximity indication includes the re-chosen carrier (e.g. frequency and/or component carrier) instead of the previously indicated carrier according to the preceding access.

In step 6, the UE is configured by the eNB with a measurement configuration for the UE's HeNB detection on the thus indicated carrier (e.g. frequency and/or component carrier). Then, in step 7, the UE performs measurements based on the received measurement configuration for detecting the HeNB of the permitted (CSG/hybrid) microcell being approached. This measurement is performed on the thus indicated carrier for which the measurement configuration has been received, exemplarily being denoted as f2 in Figure 2. Since in the present case it is assumed that the HeNB has in the meantime changed its carrier or carriers for radio access to f2, the measurement on the carrier according to the preceding access succeeds. That is, the HeNB (and its PCI) may be detected by the UE, which is then reported to the eNB in step 8. Hence, the proximity reporting and inbound mobility procedures according to exemplary embodiments of the present invention succeed accordingly.

Thus, in the subsequent steps 9 to 13, the actual handover of the UE from the eNB to the HeNB may be performed. Details of the actual handover procedures are beyond the scope of the present specification. As shown in Figure 2, the actual handover may for example comprise a configuration of the UE to perform system information (SI) acquisition (step 9), a SI acquisition by the UE on the broadcast control channel (BCCH) including cell global identifier (CGI), tracking area identifier (TAI) and CSG identifier (step 10), a measurement report from the UE to the eNB including CGI, TAI and a (CSG) member indication (step 11), a handover procedure including corresponding requests and acknowledgments between the eNB and the HeNB (e.g. via MME and/or HeNB GW) (step 12), and a final handover command from the eNB to the UE (step 13).

While not shown in the exemplary signaling of Figure 2, since it is assumed that the carrier f2 indicated in the second proximity indication is the currently valid carrier of the HeNB, it may be that one or more further proximity indications with associated measurement configurations and measurements follow after step 7 of Figure 2. Namely, if the carrier indicated in the second proximity indication is not the currently valid carrier of the HeNB, the UE may again re-chose another carrier from the previously acquired and stored set or sets of carriers, which may be accomplished in a similar manner as described in connection with step 5 above, and may send a further proximity indication with the currently re-chosen carrier as long as the HeNB may be detected, thus resulting in a successful proximity reporting and mobility procedure, or the acquired and stored set or sets of carriers are used up without success, thus resulting in the final failure of the proximity reporting and mobility procedure.

Regarding the second proximity indication in step 5 of Figure 2 (or any further proximity indication), the proximity indication may include a "leaving" proximity indication and/or an "entering" proximity indication. That is, if upon being granted a measurement configuration for the recently indicated carrier, where the stored carrier should be found, no trace of the target HeNB could be found, the UE may send a "leaving" proximity indication message to the network (i.e. the eNB) indicating release of the carrier included in the previous proximity indication (i.e. the carrier where the target microcell PCI was expected to be found) to release the initial measurement configuration, and/or the UE may send an "entering" proximity indication message to the network (i.e. the eNB) indicating entry of the carrier included in the next/recent proximity indication (i.e. the carrier where the target microcell PCI is next expected to be found) to initiate a corresponding measurement configuration. Referring to the example of Figure 2, both the "leaving" proximity indication for carrier f1 and the "entering" proximity indication for carrier f2 may be included in the proximity indication of step 5, or the proximity indication of step 5 may be the "entering" proximity indication for carrier f2 while the "leaving" proximity indication for carrier f1 may be an additional proximity indication (not shown) before or after that of step 5.

In view of the above, a method according to exemplary embodiments of the present invention may comprise sending, to a serving base station (e.g. an eNB in case of inbound mobility, or an HeNB in case of inter-microcell mobility) representing a source of mobility of a user equipment, a first proximity indication indicating proximity to a microcell base station (e.g. an HeNB, a CSG/hybrid HeNB in both cases of inbound and inter-microcell mobility) representing a target of mobility of said user equipment, said first proximity indication including a carrier (e.g. f1) according to a preceding access of said user equipment to the microcell base station, and, when detecting the microcell base station on said carrier according to the preceding access fails, sending, to the serving base station, a second proximity indication indicating proximity to the microcell base station, said second proximity indication including a carrier (e.g. f2) being different from said carrier according to the preceding access. A method according to exemplary embodiments of the present invention may further comprise receiving, from the serving base station, a measurement configuration for said carrier included in the first/second proximity indication, and performing measurements based on the received measurement configuration on said carrier included in the first/second proximity indication for detecting the microcell base station, as well as acquiring and storing a set of carriers used by the microcell base station during the preceding access of said user equipment, including a primary carrier and/or a set of secondary carriers, and/or a set of carriers not used but available for use by the microcell base station during the preceding access of said user equipment. A method according to exemplary embodiments of the present invention may be operable at the user equipment UE. The sending, receiving and acquiring operations may be accomplished e.g. by a transceiver or interface being controlled accordingly by a processor, the information acquisition and measurement operations may be accomplished e.g. by a processor, and the storing operation may be accomplished e.g. by a memory.

The above-described procedures and functions may be implemented by respective functional elements, processors, or the like, as described below.

While in the foregoing exemplary embodiments of the present invention are described mainly with reference to methods, procedures and functions, corresponding exemplary embodiments of the present invention also cover respective apparatuses, network nodes and systems, including both software and/or hardware thereof.

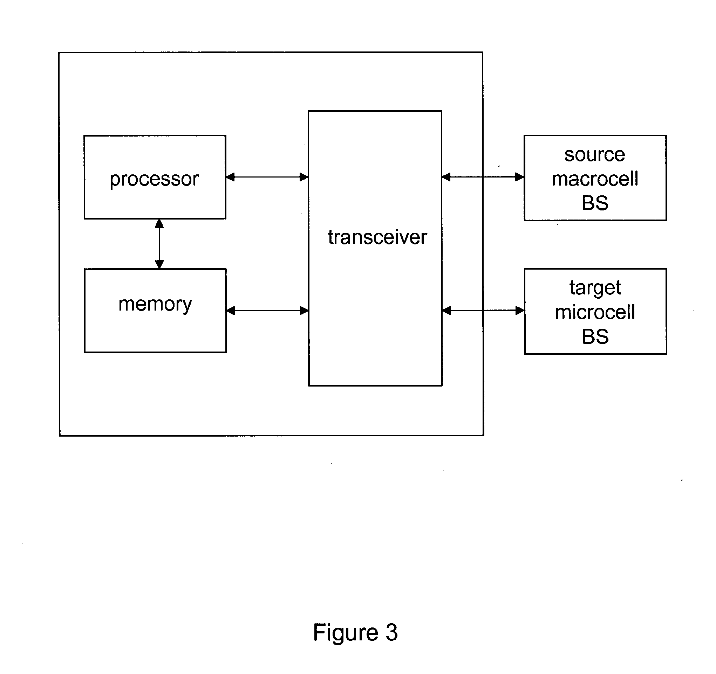

Respective exemplary embodiments of the present invention are described below referring to Figure 3, while for the sake of brevity reference is made to the detailed description of respective corresponding methods and operations according to Figure 2 on the basis of Figure 1, respectively.

In Figure 3 below, the solid line blocks are basically configured to perform respective operations as described above. The entirety of solid line blocks are basically configured to perform the methods and operations as described above, respectively. With respect to Figure 3, it is to be noted that the individual blocks are meant to illustrate respective functional blocks implementing a respective function, process or procedure, respectively. Such functional blocks are implementation-independent, i.e. may be implemented by means of any kind of hardware or software, respectively. The arrows interconnecting individual blocks are meant to illustrate an operational coupling therebetween, which may be a physical and/or logical coupling, which on the one hand is implementation-independent (e.g. wired or wireless) and on the other hand may also comprise an arbitrary number of intermediary functional entities not shown. The direction of arrow is meant to illustrate the direction in which certain operations are performed and/or the direction in which certain data is transferred.

Further, in Figure 3, only those functional blocks are illustrated, which relate to any one of the above-described methods, procedures and functions. A skilled person will acknowledge the presence of any other conventional functional blocks required for an operation of respective structural arrangements, such as e.g. a power supply, a central processing unit, respective memories or the like. Among others, memories are provided for storing programs or program instructions for controlling the individual functional entities to operate as described herein.

Figure 3 shows a block diagram of an apparatus according to exemplary embodiments of the present invention. In view of the above, the thus described apparatus may represents a (part of a) user equipment UE, as described above.

According to Figure 3, the apparatus according to exemplary embodiments of the present invention is configured to perform a procedure as described in conjunction with Figure 2. Therefore, while basic operations are described hereinafter, reference is made to the above description for details.

According to an exemplary embodiment depicted in Figure 3, the thus depicted apparatus comprises a transceiver, a processor and a memory. The transceiver may be specifically configured to interface with a serving base station (e.g. an eNB in case of inbound mobility, or an HeNB in case of inter-microcell mobility) representing a source of mobility of a user equipment and a microcell base station (e.g. an HeNB, a CSG/hybrid HeNB in both cases of inbound and inter-microcell mobility) representing a target of mobility of said user equipment, thus representing means for interfacing with serving (macrocell/microcell) and microcell base stations, i.e. for effecting any kinds of sending and/or receiving operations to and/or from serving (macrocell/microcell) and microcell base stations. The processor may be specifically configured to cause the transceiver to send, to the serving base station (e.g. an eNB in case of inbound mobility, or an HeNB in case of inter-microcell mobility), a first proximity indication indicating proximity to the microcell base station, said first proximity indication including a carrier according to a preceding access of said user equipment to the microcell base station, and, when detecting the microcell base station on said carrier according to the preceding access fails (which may be determined e.g. by the processor), send, to the serving base station (e.g. an eNB in case of inbound mobility, or an HeNB in case of inter-microcell mobility), a second proximity indication indicating proximity to the microcell base station, said second proximity indication including a carrier being different from said carrier according to the preceding access. The processor may be further specifically configured to cause the transceiver to, when detecting the microcell base station based on said carrier according to the preceding access fails (which may be determined e.g. by the processor), send, to the serving (macrocell/microcell) base station, a proximity indication for release of said carrier included in the first proximity indication, and/or send, to the serving (macrocell/microcell) base station, a proximity indication for entry of said carrier included in the second proximity indication. Thus, the processor represents means for controlling the transceiver or, stated in other words, for controlling a sending of proximity indications and/or detection of a microcell base station (e.g. HeNB, CSG/hybrid eNB).

The transceiver may be specifically configured to receive, from the serving base station, a measurement configuration for said carrier included in the first/second proximity indication, thus representing means for receiving measurement configurations, and the processor may be further specifically configured to perform, via the transceiver, measurements based on the received measurement configuration on said carrier included in the first/second proximity indication for detecting the microcell base station, thus representing means for performing measurements for detecting the microcell base station.

The processor may be further specifically configured to, via the transceiver, acquire the set of carriers used by the microcell base station during the preceding access of said user equipment, including the primary carrier and/or the set of secondary carriers, and/or the set of carriers not used but available for use by the microcell base station during the preceding access of said user equipment, thus representing means for acquiring carrier-related information. The memory may be specifically configured to store the acquired set or sets of carriers, thus representing means for storing carrier-related information (irrespective of whether such carrier-related information is recently acquired or stored in advance).

The processor may be specifically configured to acquire the set or sets of carriers based on information on autonomous component carrier selection (ACCS) being communicated using over-the-air communication (OTAC) to and/or from the microcell base station, thus representing means for acquiring information related to ACCS and/or carrier aggregation. While not being illustrated, exemplary embodiments of the present invention also encompass an apparatus being operated as or at a serving base station (e.g. an eNB in case of inbound mobility, or an HeNB in case of inter-microcell mobility) and/or an apparatus being operated as or at a microcell base station (e.g. an HeNB, a CSG/hybrid HeNB in both cases of inbound and inter-microcell mobility), as described above. Such apparatus or apparatuses may be configured to perform any BS-side procedures as described above and/or as required for supplementing the UE-side procedures as described in conjunction with Figures 2 and 3. Therefore, reference is made to the above description for details.

According to exemplarily embodiments of the present invention, a system may comprise any conceivable combination of the thus depicted apparatus (such as UE) and other network elements (such as eNB and/or HeNB, or the like), which are configured to cooperate as described above.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, any method step is suitable to be implemented as software or by hardware without changing the idea of the present invention. Devices and means can be implemented as individual devices, but this does not exclude that they are implemented in a distributed fashion throughout the system, as long as the functionality of the device is preserved. Such and similar principles are to be considered as known to a skilled person.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

Generally, for the purpose of the present invention as described herein above; it should be noted that
- method steps and functions likely to be implemented as software code portions and being run using a processor at one of the entities, a network element, or a terminal (as examples of devices, apparatuses and/or modules thereof, or as examples of entities including apparatuses and/or modules therefor), are software code independent and can be specified using any known or future developed programming language, such as e.g. Java, C++, C, and Assembler, as long as the functionality defined by the method steps is preserved;
- generally, any method step is suitable to be implemented as software or by hardware without changing the idea of the invention in terms of the functionality implemented;
- method steps, functions, and/or devices, apparatuses, units or means likely to be implemented as hardware components at a terminal or network element, or any module(s) thereof, are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components; in addition, any method steps and/or devices, units or means likely to be implemented as software components may for example be based on any security architecture capable e.g. of authentication, authorization, keying and/or traffic protection;
- devices, apparatuses, units or means can be implemented as individual devices, apparatuses, units or means, but this does not exclude that they are implemented in a distributed fashion throughout the system, as long as the functionality of the device, apparatus, unit or means is preserved,
- an apparatus may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

The present invention also covers any conceivable combination of method steps and operations described above, and any conceivable combination of nodes, apparatuses, modules or elements described above, as long as the above-described concepts of methodology and structural arrangement are applicable.

There are provided measures for proximity reporting procedures in radio access, for example in heterogeneous network environments, said measures exemplarily comprising sending, to a serving base station representing a source of mobility of a user equipment, a first proximity indication indicating proximity to a microcell base station representing a target of mobility of said user equipment, said first proximity indication including a carrier according to a preceding access of said user equipment to the microcell base station, and, when detecting the microcell base station on said carrier according to the preceding access fails, sending, to the serving base station, a second proximity indication indicating proximity to the microcell base station, said second proximity indication including a carrier being different from said carrier according to the preceding access. Said measures may exemplarily be applied for mobility procedures in LTE, LTE-Advanced, HSPA and/or UMTS radio access systems.

Even though the invention is described above with reference to the examples according to the accompanying drawings, it is to be understood that the invention is not restricted thereto. Rather, it is apparent to those skilled in the art that the present invention can be modified in many ways without departing from the scope of the inventive idea as defined by the appended claims.

## Claims

1. A method performed at a user equipement comprising
sending, to a serving base station representing a source base station of mobility of the user equipment, which serving base station is currently serving said user equipment, a first proximity indication indicating proximity to a microcell base station representing a target base station of mobility of said user equipment, which microcell base station has previously served said user equipment in a preceding access, said first proximity indication including a carrier according to the preceding access,
**characterized by**
when detecting the microcell base station on said carrier according to the preceding access fails, sending, to the serving base station, a second proximity indication indicating proximity to the microcell base station, said second proximity indication including another carrier being different from said carrier according to the preceding access, wherein
said carrier according to the preceding access is a carrier out of a set of carriers, and said another carrier is another carrier out of said set of carriers, and
said set of carriers includes at least one of carriers used by the microcell base station during the preceding access of said user equipment and carriers not used but available for use by the microcell base station during the preceding access of said user equipment.

2. The method according to claim 1, further comprising
when detecting the microcell base station based on said carrier according to the preceding access fails, sending, to the serving base station, at least one of a proximity indication for release of said carrier included in the first proximity indication, and a proximity indication for entry of said carrier included in the second proximity indication.

3. The method according to any one of claims 1 to 2, further comprising
receiving, from the serving base station, a measurement configuration for the carrier included in a first proximity indication or in a second proximity indication, and
performing measurements based on the received measurement configuration on the carrier included in the first proximity indication or in a second proximity indication for detecting the microcell base station.

4. The method according to any one of claims 1 to 3, wherein said carrier included in the first proximity indication comprises a carrier by which said user equipment was served by the microcell base station in the preceding access or a primary carrier used by the microcell base station during the preceding access of said user equipment.

5. The method according to any one of claims 1 to 4, wherein said carrier included in the second proximity indication comprises one of a set of carriers used by the microcell base station during the preceding access of said user equipment, including at least one of a primary carrier and a set of secondary carriers, or one of a set of carriers not used but available for use by the microcell base station during the preceding access of said user equipment.

6. The method according to claim 5, further comprising
acquiring and storing the set of carriers used by the microcell base station during the preceding access of said user equipment, including at least one of the primary carrier and the set of secondary carriers, and/or the set of carriers not used but available for use by the microcell base station during the preceding access of said user equipment.

7. The method according to claim 6, wherein said sets of carriers comprise at least one of primary and secondary component carriers according to an autonomous component carrier selection for the microcell base station.

8. The method according to any one of claims 6 and 7, wherein said acquiring is based on information on autonomous component carrier selection being communicated using over-the-air communication between said user equipment and the microcell base station.

9. The method according to any one of claims 1 to 8, wherein the serving base station is a macrocell base station or a microcell base station.

10. The method according to any one of claims 1 to 9, wherein a microcell is a cell of a closed subscriber group or a hybrid cell of a closed subscriber group and other subscribers, and said user equipment is a member of said closed subscriber group.

11. The method according to any one of claims 1 to 10, wherein
said serving base station comprises a base station, eNB, or a home base station, HeNB, and said microcell base station comprises a home base station, HeNB, in accordance with an LTE or LTE-Advanced radio access system, or said serving base station comprises an access node and said microcell base station comprises a femto access node in accordance with a HSPA or UMTS radio access system.

12. A user equipment comprising
an transceiver configured to interface with a serving base station representing a source base station of mobility of the user equipment and a microcell base station representing a target base station of mobility of said user equipment, and
a processor configured to cause the transceiver to send, to the serving base station, which is currently serving said user equipment, a first proximity indication indicating proximity to the microcell base station, which has previously served said user equipment in a preceding access, said first proximity indication including a carrier according to the preceding access,
**characterized in that**
the processor is further configured to cause the transceiver to, when detecting the microcell base station on said carrier according to the preceding access fails, send, to the serving base station, a second proximity indication indicating proximity to the microcell base station, said second proximity indication including another carrier being different from said carrier according to the preceding access, wherein
said carrier according to the preceding access is a carrier out of a set of carriers, and said another carrier is another carrier out of said set of carriers, and
said set of carriers includes at least one of carriers used by the microcell base station during the preceding access of said user equipment and carriers not used but available for use by the microcell base station during the preceding access of said user equipment.

13. The user equipment according to claim 12, wherein the processor is further configured to cause the transceiver to
when detecting the microcell base station based on said carrier according to the preceding access fails, send, to the serving base station, at least one of a proximity indication for release of said carrier included in the first proximity indication and a proximity indication for entry of said carrier included in the second proximity indication.

14. The user equipment according to any one of claims 12 to 13, wherein
the transceiver is configured to receive, from the serving base station, a measurement configuration for the carrier included in a first proximity indication or in a second proximity indication, and
the processor is further configured to perform, via the transceiver, measurements based on the received measurement configuration on the carrier included in the first proximity indication or in a second proximity indication for detecting the microcell base station.

15. The user equipment according to any one of claims 12 to 14, wherein said carrier included in the first proximity indication comprises a carrier by which said user equipment was served by the microcell base station in the preceding access or a primary carrier used by the microcell base station during the preceding access of said user equipment.

16. The user equipment according to any one of claims 12 to 15, wherein said carrier included in the second proximity indication comprises one of a set of carriers used by the microcell base station during the preceding access of said user equipment, including at least one of a primary carrier and a set of secondary carriers, or one of a set of carriers not used but available for use by the microcell base station during the preceding access of said user equipment.

17. The user equipment according to claim 16, wherein
the processor is further configured to, via the transceiver, acquire the set of carriers used by the microcell base station during the preceding access of said user equipment, including at least one of the primary carrier and the set of secondary carriers, and/or the set of carriers not used but available for use by the microcell base station during the preceding access of said user equipment, and
the apparatus further comprises a memory configured to store the acquired set or sets of carriers.

18. The user equipment according to claim 17, wherein said sets of carriers comprise at least one of primary and secondary component carriers according to an autonomous component carrier selection for the microcell base station.

19. The user equipment according to any one of claims 17 and 18, wherein the processor is configured to acquire the set or sets of carriers based on information on autonomous component carrier selection being communicated using over-the-air communication between said user equipment and the microcell base station.

20. The user equipment according to any one of claims 12 to 19, wherein the serving base station is a macrocell base station or a microcell base station.

21. The user equipment according to any one of claims 12 to 20, wherein a microcell is a cell of a closed subscriber group or a hybrid cell of a closed subscriber group and other subscribers, and said user equipment is a member of said closed subscriber group.

22. The user equipment according to any one of claims 12 to 21, wherein
said serving base station comprises a base station, eNB, or a home base station, HeNB, and said microcell base station comprises a home base station, HeNB, in accordance with an LTE or LTE-Advanced radio access system, or said serving base station comprises an access node and said microcell base station comprises a femto access node in accordance with a HSPA or UMTS radio access system.

23. A computer program product including a program comprising software code portions being arranged, when run on a processor of an apparatus, to perform the method according to any one of claims 1 to 10.

24. The computer program product according to claim 23, wherein the computer program product comprises a computer-readable medium on which the software code portions are stored, and/or wherein the program is directly loadable into a memory of the processor.

## Patentansprüche

1. Verfahren, das an einem Teilnehmergerät durchgeführt wird, umfassend:
das Senden an eine versorgende Basisstation, die eine Ursprungs-Basisstation der Mobilität des Teilnehmergeräts darstellt, wobei die versorgende Basisstation das Teilnehmergerät laufend versorgt, wobei eine erste Entfernungsanzeige die Entfernung zu einer Mikrozellen-Basisstation anzeigt, die eine Zielbasisstation der Mobilität des Teilnehmergeräts darstellt, wobei die Mikrozellen-Basisstation das Teilnehmergerät vorher bei einem vorhergehenden Zugriff versorgt hat, wobei die erste Entfernungsanzeige einen Träger gemäß dem vorhergehenden Zugriff aufweist,
**dadurch gekennzeichnet, dass**
wenn das Erfassen der Mikrozellen-Basisstation auf dem Träger gemäß dem vorhergehenden Zugriff scheitert, eine zweite Entfernungsanzeige zum Anzeigen der Entfernung zu der Mikrozellen-Basisstation an die versorgende Basisstation gesendet wird, wobei die zweite Entfernungsanzeige einen weiteren Träger aufweist, der sich von dem Träger gemäß dem vorgehenden Zugriff unterscheidet, wobei
der Träger gemäß dem vorhergehenden Zugriff ein Träger aus einer Gruppe von Trägern ist und der andere Träger ein anderer Träger aus der Gruppe von Trägern ist, und
die Gruppe von Trägern mindestens einen der Träger aufweist, der von der Mikrozellen-Basisstation während des vorhergehenden Zugriffs auf das Teilnehmergerät verwendet wird, und Träger, die nicht verwendet werden, aber für die Verwendung durch die Mikrozellen-Basisstation während des vorhergehenden Zugriffs auf das Teilnehmergerät bereitstehen.

2. Verfahren nach Anspruch 1, ferner umfassend:
wenn das Erfassen der Mikrozellen-Basisstation aufgrund des Trägers gemäß dem vorhergehenden Zugriff scheitert, das Senden von mindestens einer Entfernungsanzeige zur Freigabe des Trägers, der in der ersten Entfernungsanzeige enthalten ist, an die versorgende Basisstation, und eine Entfernungsanzeige für die Eingabe des Trägers, der in der zweiten Entfernungsanzeige enthalten ist.

3. Verfahren nach einem der Ansprüche 1 oder 2, ferner umfassend:
das Empfangen einer Messkonfiguration für den Träger, der in einer ersten Entfernungsanzeige oder in einer zweiten Entfernungsanzeige enthalten ist, von der versorgenden Basisstation, und
das Durchführen von Messungen aufgrund der empfangenen Messkonfiguration auf dem Träger, der in der ersten Entfernungsanzeige oder in einer zweiten Entfernungsanzeige zum Erfassen der Mikrozellen-Basisstation enthalten ist.

4. Verfahren nach einem der Ansprüche 1 bis 3, wobei der Träger, der in der ersten Entfernungsanzeige enthalten ist, einen Träger aufweist, durch den das Teilnehmergerät von der Mikrozellen-Basisstation bei dem vorhergehenden Zugriff versorgt wurde, oder einen primären Träger, der von der Mikrozellen-Basisstation während des vorhergehenden Zugriffs des Teilnehmergeräts verwendet wurde.

5. Verfahren nach einem der Ansprüche 1 bis 4, wobei der Träger, der in der zweiten Entfernungsanzeige enthalten ist, einen aus einer Gruppe von Trägern aufweist, der von der Mikrozellen-Basisstation während des vorhergehenden Zugriffs des Teilnehmergeräts verwendet wird, einschließlich mindestens einem aus einem primären Träger und einer Gruppe von sekundären Trägern oder einem aus einer Gruppe von Trägern, die nicht verwendet werden, jedoch zur Verwendung durch die Mikrozellen-Basisstation während des vorhergehenden Zugriffs des Teilnehmergeräts bereitstehen.

6. Verfahren nach Anspruch 5, ferner umfassend:
das Erwerben und Speichern der Gruppe von Trägern, die von der Mikrozellen-Basisstation während des vorhergehenden Zugriffs des Teilnehmergeräts verwendet wurden, einschließlich mindestens einem aus dem primären Träger und der Gruppe von sekundären Trägern und/oder der Gruppe von Trägern, die nicht verwendet werden, jedoch zur Verwendung durch die Mikrozellen-Basisstation während des vorhergehenden Zugriffs des Teilnehmergeräts bereitstehen.

7. Verfahren nach Anspruch 6, wobei die Gruppen von Trägern mindestens einen von primären und sekundären Bauteilträgern gemäß einer Auswahl aus eigenständigen Bauteilträgern für die Mikrozellen-Basisstation umfassen.

8. Verfahren nach einem der Ansprüche 6 und 7, wobei das Erwerben aufgrund von Informationen über eine Auswahl eigenständiger Bauteilträger erfolgt, die durch Verwendung einer Over-the-Air-Kommunikation zwischen dem Teilnehmergerät und der Mikrozellen-Basisstation mitgeteilt werden.

9. Verfahren nach einem der Ansprüche 1 bis 8, wobei die versorgende Basisstation eine Makrozellen-Basisstation oder eine Mikrozellen-Basisstation ist.

10. Verfahren nach einem der Ansprüche 1 bis 9, wobei eine Mikrozelle eine Zelle einer geschlossenen Teilnehmergruppe oder eine Hybridzelle einer geschlossenen Teilnehmergruppe und anderer Teilnehmer ist und wobei das Teilnehmergerät ein Mitglied der geschlossenen Teilnehmergruppe ist.

11. Verfahren nach einem der Ansprüche 1 bis 10, wobei
die versorgende Basisstation eine Basisstation, eNB, oder eine Heimbasisstation, HeNB, und die Mikrozellen-Basisstation eine Heimbasisstation, HeNB, gemäß einem LTE- oder LTE-Advanced-Funkzugangssystem umfasst oder die versorgende Basisstation einen Zugangsknoten aufweist und die Mikrozellen-Basisstation einen femto-Zugangsknoten gemäß einem HSPA- oder UMTS-Funkzugangssystem aufweist.

12. Teilnehmergerät, umfassend
einen Sender-Empfänger, der konfiguriert ist, um sich mit einer versorgenden Basisstation zu verbinden, die eine Mobilitäts-Quellbasisstation des Teilnehmergeräts darstellt, und eine Mikrozellen-Basisstation, die eine Zielbasisstation der Mobilität des Teilnehmergeräts darstellt, und
einen Prozessor, der konfiguriert ist, um zu bewirken, dass der Sender-Empfänger der versorgenden Basisstation, die das Teilnehmergerät momentan versorgt, eine erste Entfernungsanzeige zu senden, die die Entfernung zu der Mikrozellen-Basisstation angibt, die vorher das Teilnehmergerät bei einem vorhergehenden Zugriff versorgt hat, wobei die erste Entfernungsanzeige einen Träger gemäß dem vorhergehenden Zugriff aufweist,
**dadurch gekennzeichnet, dass**
der Prozessor ferner konfiguriert ist, um zu bewirken, dass der Sender-Empfänger, wenn das Erfassen der Mikrozellen-Basisstation auf dem Träger gemäß dem vorhergehenden Zugriff scheitert, eine zweite Entfernungsanzeige zum Anzeigen der Entfernung der Mikrozellen- Basisstation an die versorgende Basisstation sendet, wobei die zweite Entfernungsanzeige einen weiteren Träger aufweist, der sich von dem Träger gemäß dem vorhergehenden Zugriff unterscheidet, wobei
der Träger gemäß dem vorhergehenden Zugriff ein Träger aus einer Gruppe von Trägern ist und der andere Träger ein anderer Träger aus der Gruppe von Trägern ist, und
die Gruppe von Trägern mindestens einen der Träger aufweist, der von der Mikrozellen-Basisstation während des vorhergehenden Zugriffs auf das Teilnehmergerät verwendet wird, und Träger, die nicht verwendet werden, aber für die Verwendung durch die Mikrozellen-Basisstation während des vorhergehenden Zugriffs auf das Teilnehmergerät bereitstehen.

13. Teilnehmergerät nach Anspruch 12, wobei der Prozessor ferner konfiguriert ist, um zu bewirken, dass der Sender-Empfänger,
wenn das Erfassen der Mikrozellen-Basisstation aufgrund des Trägers gemäß dem vorhergehenden Zugriff scheitert, mindestens eine aus einer Entfernungsanzeige zur Freigabe des Trägers, der in der ersten Entfernungsanzeige enthalten ist, und einer Entfernungsanzeige für die Eingabe des Trägers, der in der zweiten Entfernungsanzeige enthalten ist, an die versorgende Basisstation sendet.

14. Teilnehmergerät nach einem der Ansprüche 12 bis 13, wobei
der Sender-Empfänger konfiguriert ist, um eine Messkonfiguration für den Träger, der in einer ersten Entfernungsanzeige oder in einer zweiten Entfernungsanzeige enthalten ist, von der versorgenden Basisstation zu empfangen, und
der Prozessor ferner konfiguriert ist, um über den Sender-Empfänger Messungen aufgrund der empfangenen Messkonfiguration auf dem Träger, der in der ersten Entfernungsanzeige oder in einer zweiten Entfernungsanzeige zum Erfassen der Mikrozellen-Basisstation enthalten ist, durchzuführen.

15. Teilnehmergerät nach einem der Ansprüche 12 bis 14, wobei der Träger, der in der ersten Entfernungsanzeige enthalten ist, einen Träger aufweist, durch den das Teilnehmergerät von der Mikrozellen-Basisstation bei dem vorhergehenden Zugriff versorgt wurde, oder einen primären Träger, der von der Mikrozellen-Basisstation während des vorhergehenden Zugriffs des Teilnehmergeräts verwendet wurde.

16. Teilnehmergerät nach einem der Ansprüche 12 bis 15, wobei der Träger, der in der zweiten Entfernungsanzeige enthalten ist, einen aus einer Gruppe von Trägern aufweist, der von der Mikrozellen-Basisstation während des vorhergehenden Zugriffs des Teilnehmergeräts verwendet wird, einschließlich mindestens einem aus einem primären Träger und einer Gruppe von sekundären Trägern oder einem aus einer Gruppe von Trägern, die nicht verwendet werden, jedoch zur Verwendung durch die Mikrozellen-Basisstation während des vorhergehenden Zugriffs des Teilnehmergeräts bereitstehen.

17. Teilnehmergerät nach Anspruch 16, wobei
der Prozessor ferner konfiguriert ist, um über den Sender-Empfänger die Gruppe von Trägern, die von der Mikrozellen-Basisstation während des vorhergehenden Zugriffs des Teilnehmergeräts verwendet werden, einschließlich mindestens einem aus dem primären Träger und der Gruppe von sekundären Trägern und/oder der Gruppe von Trägern, die nicht verwendet werden, jedoch zur Verwendung durch die Mikrozellen-Basisstation während des vorhergehenden Zugriffs des Teilnehmergeräts bereitstehen, zu erwerben, und
die Vorrichtung ferner einen Speicher aufweist, der konfiguriert ist, um die erworbene Gruppe oder Gruppen von Trägern zu speichern.

18. Teilnehmergerät nach Anspruch 17, wobei die Gruppen von Trägern mindestens einen von primären und sekundären Bauteilträgern gemäß einer Auswahl aus eigenständigen Bauteilträgern für die Mikrozellen-Basisstation umfassen.

19. Teilnehmergerät nach einem der Ansprüche 17 und 18, wobei der Prozessor konfiguriert ist, um die Gruppe oder Gruppen von Trägern aufgrund von Informationen über eine Auswahl eigenständiger Bauteilträger zu erwerben, die durch Verwendung einer Over-the-Air-Kommunikation zwischen dem Teilnehmergerät und der Mikrozellen-Basisstation mitgeteilt werden.

20. Teilnehmergerät nach einem der Ansprüche 12 bis 19, wobei die versorgende Basisstation eine Makrozellen-Basisstation oder eine Mikrozellen-Basisstation ist.

21. Teilnehmergerät nach einem der Ansprüche 12 bis 20, wobei eine Mikrozelle eine Zelle einer geschlossenen Teilnehmergruppe oder eine Hybridzelle einer geschlossenen Teilnehmergruppe und anderer Teilnehmer ist und wobei das Teilnehmergerät ein Mitglied der geschlossenen Teilnehmergruppe ist.

22. Teilnehmergerät nach einem der Ansprüche 12 bis 21, wobei
die versorgende Basisstation eine Basisstation, eNB, oder eine Heimbasisstation, HeNB, und die Mikrozellen-Basisstation eine Heimbasisstation, HeNB, gemäß einem LTE- oder LTE-Advanced-Funkzugangssystem umfasst oder die versorgende Basisstation einen Zugangsknoten aufweist und die Mikrozellen-Basisstation einen femto-Zugangsknoten gemäß einem HSPA- oder UMTS-Funkzugangssystem aufweist.

23. Computerprogrammprodukt, das ein Programm umfasst, das Softwarecode-Abschnitte aufweist, die, wenn sie auf einem Prozessor einer Vorrichtung betrieben werden, angeordnet sind, um das Verfahren nach einem der Ansprüche 1 bis 10 auszuführen.

24. Computerprogrammprodukt nach Anspruch 23, wobei das Computerprogrammprodukt ein computerlesbares Medium aufweist, auf dem die Softwarecode-Abschnitte gespeichert sind und/oder wobei das Programm direkt in einen Speicher des Prozessors geladen werden kann.

## Revendications

1. Procédé exécuté au niveau d'un équipement d'utilisateur comprenant :
- envoi, à une station de base de desserte représentant une station de base source de mobilité de l'équipement d'utilisateur, laquelle station de base de desserte desservant actuellement ledit équipement d'utilisateur, d'une première indication de proximité indiquant une proximité à une station de base de microcellule représentant une station de base cible de mobilité dudit équipement d'utilisateur, laquelle station de base de microcellule a précédemment desservi ledit équipement d'utilisateur dans un accès précédent, ladite première indication de proximité incluant une porteuse selon l'accès précédent,
**caractérisé par**
lorsque la détection de la station de base de microcellule sur ladite porteuse selon l'accès précédent échoue, envoi, à la station de base de desserte d'une seconde indication de proximité indiquant la proximité à la station de base de microcellule, ladite seconde indication de proximité incluant une autre porteuse qui est différente de ladite porteuse selon l'accès précédent, dans lequel ladite porteuse selon l'accès précédent est une porteuse parmi un ensemble de porteuses, et ladite autre porteuse est une porteuse parmi ledit ensemble de porteuses, et ledit ensemble de porteuses comprend au moins une parmi des porteuses utilisées par la station de base de microcellule lors de l'accès précédent dudit équipement d'utilisateur et des porteuses non utilisées, mais disponibles pour une utilisation par la station de base de microcellule lors de l'accès précédent dudit équipement d'utilisateur.

2. Procédé selon la revendication 1, comprenant en outre, lorsque la détection de la station de base de microcellule sur la base de ladite porteuse selon l'accès précédent échoue, l'envoi, à la station de base de desserte, d'au moins l'une parmi une indication de proximité pour la libération de ladite porteuse incluse dans la première indication de proximité, et une indication de proximité pour l'entrée de ladite porteuse incluse dans la seconde indication de proximité.

3. Procédé selon l'une quelconque des revendications 1 à 2, comprenant en outre :
- réception, depuis la station de base de desserte, d'une configuration de mesure pour la porteuse incluse dans une première indication de proximité ou dans une seconde indication de proximité, et
- réalisation de mesures sur la base de la configuration de mesure reçue sur la porteuse incluse dans la première indication de proximité ou dans une seconde indication de proximité pour détecter la station de base de microcellule.

4. Procédé selon l'une quelconque des revendications 1 à 3, dans lequel ladite porteuse incluse dans la première indication de proximité comprend une porteuse par laquelle ledit équipement d'utilisateur a été desservi par la station de base de microcellule dans l'accès précédent ou une porteuse principale utilisée par la station de base de microcellule lors de l'accès précédent par ledit équipement d'utilisateur.

5. Procédé selon l'une quelconque des revendications 1 à 4, dans lequel ladite porteuse incluse dans la seconde indication de proximité comprend une parmi un ensemble de porteuses utilisées par la station de base de microcellule lors de l'accès précédent dudit équipement d'utilisateur, incluant une porteuse principale et/ou un ensemble de porteuses secondaires, ou une parmi un ensemble de porteuses non utilisées, mais disponibles pour une utilisation par la station de base de microcellule lors de l'accès précédent dudit équipement d'utilisateur.

6. Procédé selon la revendication 5, comprenant en outre :
- acquisition et stockage de l'ensemble de porteuses utilisées par la station de base de microcellule lors de l'accès précédent dudit équipement d'utilisateur, incluant au moins l'un de la porteuse principale et de l'ensemble de porteuses secondaires, et/ou de l'ensemble de porteuses non utilisé, mais disponibles pour une utilisation par la station de base de microcellule lors de l'accès précédent dudit équipement d'utilisateur.

7. Procédé selon la revendication 6, dans lequel lesdits ensembles de porteuses comprennent des porteuses composantes principales et/ou secondaires selon une sélection de porteuses composantes autonomes pour la station de base de microcellule.

8. Procédé selon l'une quelconque des revendications 6 et 7, dans lequel ladite acquisition est basée sur des informations sur la sélection de porteuses composantes autonomes qui sont communiquées en utilisant une communication radio entre ledit équipement d'utilisateur et la station de base de microcellule.

9. Procédé selon l'une quelconque des revendications 1 à 8, dans lequel la station de base de desserte est une station de base de macrocellule ou une station de base de microcellule.

10. Procédé selon l'une quelconque des revendications 1 à 9, dans lequel une microcellule est une cellule d'un groupe d'abonnés fermé ou une cellule hybride d'un groupe d'abonnés fermé et d'autres abonnés, et ledit équipement d'utilisateur est un membre dudit groupe d'abonnés fermé.

11. Procédé selon l'une quelconque des revendications 1 à 10, dans lequel
ladite station de base de desserte comprend une station de base, eNB, ou une station de base d'origine, HeNB, et ladite station de base de microcellule comprend une station de base d'origine, HeNB, conformément à un système d'accès radio LTE ou LTE-Advanced, ou ladite station de base de desserte comprend un noeud d'accès et ladite station de base de microcellule comprend un noeud d'accès femto conformément à un système d'accès radio HSPA ou UMTS.

12. Équipement d'utilisateur comprenant :
- un émetteur-récepteur configuré pour s'interfacer avec une station de base de desserte représentant une station de base source de mobilité de l'équipement d'utilisateur et une station de base de microcellule représentant une station de base cible de mobilité dudit équipement d'utilisateur, et
- un processeur configuré pour amener l'émetteur-récepteur à envoyer, à la station de base de desserte, qui dessert actuellement ledit équipement d'utilisateur, une première indication de proximité indiquant la proximité à la station de base de microcellule, qui a desservi précédemment ledit équipement d'utilisateur dans un accès précédent, ladite première indication de proximité incluant une porteuse selon l'accès précédent,
**caractérisé en ce que**
le processeur est en outre configuré pour amener l'émetteur-récepteur à, lorsque la détection de la station de base de microcellule sur ladite porteuse selon l'accès précédent échoue, transmettre, à la station de base de desserte, une seconde indication de proximité indiquant la proximité à la station de base de microcellule, ladite seconde indication de proximité incluant une autre porteuse qui est différente de ladite porteuse selon l'accès précédent, dans lequel
ladite porteuse selon l'accès précédent est une porteuse parmi un ensemble de porteuses, et ladite autre porteuse est une autre porteuse parmi ledit ensemble de porteuses, et
ledit ensemble de porteuses inclut des porteuses utilisées par la station de base de microcellule lors de l'accès précédent dudit équipement d'utilisateur et/ou des porteuses non utilisées, mais disponibles pour une utilisation par la station de base de microcellule lors de l'accès précédent dudit équipement d'utilisateur.

13. Équipement d'utilisateur selon la revendication 12, dans lequel le processeur est en outre configuré pour amener l'émetteur-récepteur à,
lorsque la détection de la station de base de microcellule sur la base de ladite porteuse selon l'accès précédent échoue, transmettre, à la station de base de desserte, au moins l'une d'une indication de proximité pour la libération de ladite porteuse incluse dans la première indication de proximité et d'une indication de proximité pour l'entrée de ladite porteuse incluse dans la seconde indication de proximité.

14. Équipement d'utilisateur selon l'une quelconque des revendications 12 à 13, dans lequel
l'émetteur-récepteur est configuré pour recevoir, en provenance de la station de base de desserte, une configuration de mesure pour la porteuse incluse dans une première indication de proximité ou dans une seconde indication de proximité, et
le processeur est en outre configuré pour effectuer, par l'intermédiaire de l'émetteur-récepteur, des mesures basées sur la configuration de mesure reçue sur la porteuse incluse dans la première indication de proximité ou dans une seconde indication de proximité pour détecter la station de base de microcellule.

15. Équipement d'utilisateur selon l'une quelconque des revendications 12 à 14, dans lequel ladite porteuse incluse dans la première indication de proximité comprend une porteuse par laquelle ledit équipement d'utilisateur a été desservi par la station de base de microcellule dans l'accès précédent ou une porteuse principale utilisée par la station de base de microcellule lors de l'accès précédent par ledit équipement d'utilisateur.

16. Équipement d'utilisateur selon l'une quelconque des revendications 12 à 15, dans lequel ladite porteuse incluse dans la seconde indication de proximité comprend l'une d'un ensemble de porteuses utilisées par la station de base de microcellule lors de l'accès précédent dudit équipement d'utilisateur, incluant une porteuse principale et/ou un ensemble de porteuses secondaires, ou l'une d'un ensemble de porteuses non utilisées, mais disponibles pour une utilisation par la station de base de microcellule lors de l'accès précédent dudit équipement d'utilisateur.

17. Équipement d'utilisateur selon la revendication 16, dans lequel
le processeur est en outre configuré pour, par le biais de l'émetteur-récepteur, acquérir l'ensemble de porteuses utilisées par la station de base de microcellule lors de l'accès précédent dudit équipement d'utilisateur, incluant au moins l'un de la porteuse principale et de l'ensemble de porteuses secondaires, et/ou l'ensemble de porteuses non utilisées, mais disponibles pour une utilisation par la station de base de microcellule lors de l'accès précédent dudit équipement d'utilisateur, et
l'appareil comprend en outre une mémoire configurée pour stocker l'ensemble ou les ensembles de porteuses acquis.

18. Équipement d'utilisateur selon la revendication 17, dans lequel lesdits ensembles de porteuses comprennent des porteuses composantes principales et/ou secondaires en fonction d'une sélection de porteuses composantes autonomes pour la station de base de microcellule.

19. Équipement d'utilisateur selon l'une quelconque des revendications 17 et 18, dans lequel le processeur est configuré pour acquérir l'ensemble ou les ensembles de porteuses sur la base des informations sur la sélection de porteuses composantes autonomes qui sont communiquées en utilisant une communication radio entre ledit équipement d'utilisateur et la station de base de microcellule.

20. Équipement d'utilisateur selon l'une quelconque des revendications 12 à 19, dans lequel la station de base de desserte est une station de base de macrocellule ou une station de base de microcellule.

21. Équipement d'utilisateur selon l'une quelconque des revendications 12 à 20, dans lequel une microcellule est une cellule d'un groupe d'abonnés fermé ou une cellule hybride d'un groupe d'abonnés fermé et d'autres abonnés, et ledit équipement d'utilisateur est un membre dudit groupe d'abonnés fermé.

22. Équipement d'utilisateur selon l'une quelconque des revendications 12 à 21, dans lequel
ladite station de base de desserte comprend une station de base, eNB, ou une station de base d'origine, HeNB, et ladite station de base de microcellule comprend une station de base d'origine, HeNB, conformément à un système d'accès radio LTE ou LTE-Advanced, ou ladite station de base de desserte comprend un noeud d'accès et ladite station de base de microcellule comprend un noeud d'accès femto conformément à un système d'accès radio HSPA ou UMTS.

23. Produit de programme d'ordinateur incluant un programme comprenant des parties de code logiciel, qui est agencé, lorsqu'il est exécuté sur un processeur d'un appareil, pour mettre en oeuvre le procédé selon l'une quelconque des revendications 1 à 10.

24. Produit de programme d'ordinateur selon la revendication 23, dans lequel le produit de programme d'ordinateur comprend un support lisible par ordinateur sur lequel les parties de code logiciel sont stockées, et/ou dans lequel le programme est directement chargeable dans une mémoire du processeur.
